# FASCICULE DE BREVET EUROPEEN

(11) **EP 2 300 284 B1**
(45) Date de publication et mention de la délivrance du brevet: **20.09.2017**
(21) Numéro de dépôt: 09797429.9
(22) Date de dépôt: 15.07.2009
(51) Int. Cl.: B60S 1/40, B60S 1/52

(54) **SYSTEME D'ESSUIE-GLACE NOTAMMENT POUR VEHICULE AUTOMOBILE**
SCHEIBENWISCHERVORRICHTUNG, INSBESONDERE FÜR EIN KRAFTFAHRZEUG
WINDSCREEN WIPER SYSTEM, PARTICULARLY FOR A MOTOR VEHICLE

(30) Priorité: 15.07.2008 FR 0804028
(43) Date de publication de la demande: 30.03.2011
(73) Titulaire: Valeo Systèmes d'Essuyage, 78322 Le Mesnil Saint Denis (FR)
(72) Inventeur: CAILLOT, Gérald, F-78720 CERNAY LA VILLE (FR); JARASSON, Jean-Michel, F-78990 Elancourt (FR); IZABEL, Vincent, F-91380 Chilly Mazarin (FR)
(74) Mandataire: Callu Danseux, Violaine
(86) Numéro de dépôt international: PCT/EP2009/005137
(87) Numéro de publication internationale: WO 2010/006775

(56) Documents cités:
- EP-A- 0 810 133
- EP-A- 1 918 167
- WO-A1-2009/132982
- DE-A1-102004 056 835
- DE-A1-102005 060 617
- FR-A- 2 746 752
- US-A- 2 432 690
- US-A- 5 245 720
- US-A1- 2007 143 947

## Description

La présente invention a pour objet un système d'essuie-glace notamment pour un véhicule automobile.

Les systèmes d'essuie-glace, tels que ceux utilisés pour le nettoyage ou le dégivrage du pare-brise d'un véhicule automobile, comprennent généralement un bras d'actionnement relié à une source en fluide ou liquide de nettoyage et/ou de dégivrage et à un moteur, ainsi qu'un balai d'essuyage connecté au bras d'actionnement.

Au cours de l'essuyage, un mouvement relatif existe entre le bras et le balai, de sorte que la connexion entre le bras et le balai doit permettre la rotation de ce balai par rapport à ce bras.

En outre, le balai doit pouvoir être facilement connecté et déconnecté du bras, pour permettre son remplacement ou entretien.

On prévoit donc généralement un adaptateur entre le bras et le balai, pour assurer cette connexion, et les mouvements relatifs précités entre le bras et le balai.

Dans le cas où l'éjection du fluide se fait à partir de buses disposées par exemple sur le capot du véhicule, la connexion entre le bras et le balai n'a pas d'autres fonctions que celles mentionnées ci-dessus.

Par contre, on peut prévoir que le fluide soit éjecté directement du balai d'essuyage pour arroser le pare-brise, dans le but d'augmenter la précision et l'efficacité du lavage ou du dégivrage.

Dans ce cas, il est nécessaire d'amener le fluide jusqu'au balai. Généralement, le balai comprend une ou deux rampes d'acheminement du fluide. On peut prévoir de connecter directement le ou les tuyaux d'arrivée en fluide sur ces rampes. Mais la connexion hydraulique est alors peu fiable en raison du mouvement relatif entre le bras et le balai.

De plus, il est difficile dans ce cas de cacher et de protéger les tuyaux d'arrivée.

On utilise donc généralement un connecteur hydraulique sur lequel vient se connecter l'arrivée en fluide, et qui est raccordé aux rampes d'acheminement du fluide dans le balai (voir par exemple le document US2432690 A). Un des problèmes est que la connexion et la déconnexion ne sont pas des opérations simples pour l'utilisateur qui veut changer un balai usé.

En effet, l'accès au connecteur, disposé sous l'adaptateur, est difficile.

En outre, le risque existe que l'arrivée en fluide se déconnecte du connecteur en raison des mouvements relatifs entre le bras et le balai.

Un autre problème est celui de l'effort de surpression engendré généralement parallèlement au balai, dans la mesure où le tuyau d'arrivée en fluide est généralement dissimulé et guidé le long du bras, et donc arrive au niveau de la connexion orienté parallèlement à ce balai. Cet effort de surpression risque alors de déconnecter le tuyau d'arrivée du raccord d'entrée dans le répartiteur.

L'objet de l'invention est donc d'apporter une solution aux problèmes précités parmi d'autres problèmes.

L'invention se rapporte donc à un système d'essuie-glace, notamment pour véhicule automobile, comprenant un balai d'essuyage articulé sur un bras d'actionnement par l'intermédiaire d'un adaptateur.

Cet adaptateur est connecté d'une part au bras et d'autre part à un connecteur hydraulique.

Ce connecteur hydraulique est connecté au balai et comprend au moins un raccord d'entrée destiné à être raccordé à une arrivée de fluide notamment de nettoyage et/ou de dégivrage. Le système comprend en outre au moins un élément de jonction rigide dont une extrémité est raccordée directement ou indirectement au raccord d'entrée, et dont l'autre extrémité est destinée à être raccordée directement ou indirectement à l'arrivée de fluide.

Ainsi, la connexion entre l'arrivée de fluide et le connecteur est sécurisée et fiabilisée.

De plus, la pièce de jonction crée un déport rendant plus facile la connexion/déconnexion par l'utilisateur, par exemple lorsqu'il veut changer un balai usé, et permettant plus facilement de dissimuler l'ensemble de la connexion et de la rendre ainsi plus esthétique.

L'élément de jonction rigide est de préférence orienté parallèlement au balai. Selon l'invention l'adaptateur ou le bras peut comprendre des premiers moyens de blocage qui coopèrent avec l'élément de jonction rigide pour assurer son maintien en position.

Ces premiers moyens de blocage sont de préférence tels que la coopération entre l'élément de jonction et ces premiers moyens de blocage est réalisée selon un axe perpendiculaire au balai.

Ces premiers moyens de blocage comprennent au moins une découpe formée dans une des parois de l'adaptateur ou du bras ou dans une pièce rapportée à l'adaptateur ou au bras, ou moulée dans cet adaptateur ou ce bras.

La forme de cette découpe est telle que l'élément de jonction rigide peut être coincé en force dans cette découpe de manière temporaire.

Ces premiers moyens de blocage permettent notamment d'empêcher la déconnexion en cas de surpression, et permettent un montage sans effort pour l'utilisateur.

Le système peut comprendre un couvercle fixé rigidement directement ou indirectement sur le bras, en arrière de l'articulation du balai sur le bras, et sous lequel est disposé tout ou partie de l'élément de jonction.

Ce couvercle permet notamment de déporter la connexion en arrière de l'articulation bras/balai, pour une meilleure ergonomie, et de masquer la connexion pour une protection et une esthétique améliorée.

Le couvercle peut comprendre des deuxièmes moyens de blocage qui coopèrent avec l'élément de jonction rigide pour assurer son maintien en position.

Ces deuxièmes moyens de blocage sont de préférence tels que la coopération entre l'élément de jonction et ces deuxièmes moyens de blocage est réalisée selon un axe perpendiculaire au balai.

Ces deuxièmes moyens de blocage peuvent comprendre au moins une découpe formée dans une des parois du couvercle.

Cette découpe peut également être formée dans une pièce rapportée au couvercle, ou moulée dans celui-ci.

La forme de cette découpe est telle que l'élément de jonction rigide peut être coincé en force dans cette découpe de manière temporaire.

Ces deuxièmes moyens de blocage permettent également d'empêcher la déconnexion en cas de surpression, et permettent un montage sans effort pour l'utilisateur.

Le couvercle peut comprendre des moyens de déblocage permettant de faciliter le déblocage de l'élément de jonction des deuxièmes moyens de blocage.

Ces moyens de déblocages comprennent de préférence au moins une ouverture dans le couvercle, à travers laquelle passe un ergot formé dans l'élément de jonction.

Le système peut également comprendre un socle fixé rigidement sur le bras et sur lequel est articulé le couvercle par un moyen d'articulation de type charnière.

De préférence, l'élément de jonction est alors intégré au socle.

Le socle et/ou le couvercle peuvent comprendre un clapet anti-retour et/ou au moins un élément de connexion électrique.

Le système peut comprendre au moins deux éléments de jonction rigides connectés l'un dans l'autre par l'une de leurs deux extrémités.

Un de ces deux éléments de jonction rigides est alors raccordé directement ou indirectement par son autre extrémité au raccord d'entrée, et le deuxième de ces deux éléments de jonction rigides est alors destiné à être raccordé directement ou indirectement par son autre extrémité à l'arrivée de fluide.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants.
- figures 1a et 1b : représentent schématiquement un exemple de balai d'essuyage, respectivement vu en perspective éclatée et en coupe transversale,
- figure 2a et 2b : représentent schématiquement les détails de la connexion entre le bras et le balai, selon un premier exemple,
- figure 3a et 3b : représentent schématiquement les détails de la connexion entre le bras et le balai, selon un deuxième exemple,
- figure 4a et 4b : représentent schématiquement les détails de la connexion entre le bras et le balai, selon un troisième exemple,
- figure 5a et 5b : représentent schématiquement les détails de la connexion entre le bras et le balai, selon un quatrième exemple,
- figure 6a et 6b : représentent schématiquement les détails de la connexion entre le bras et le balai, selon un premier exemple.

Tel que représenté aux figures la et 1b, le balai d'essuyage 4 est relié à, ou destiné à être relié à, un bras d'actionnement (non représenté) par l'intermédiaire d'un adaptateur 2, pour former alors un système d'essuie-glace.

L'adaptateur 2 est relié en rotation à un connecteur hydraulique 3 par un axe d'articulation 22 et les orifices d'assemblage 20 et 21 respectivement dans le connecteur 3 et l'adaptateur 2.

Ce connecteur hydraulique 3 comprend un raccord 6 d'entrée, destiné à être connecté à une arrivée en fluide de nettoyage et/ou de dégivrage.

Le connecteur 3 comprend par ailleurs plusieurs raccords de sortie 24, 25, 26, destinés à se connecter aux rampes d'acheminement 19, 23 du balai 4.

Ces rampes d'acheminement 19, 23 du balai 4 sont, dans cet exemple, formées dans la partie supérieure de ce balai 4 qui joue le rôle de déflecteur 15, formée en deux parties 15 connectées de chaque côté du connecteur 3. Ces rampes d'acheminement 19, 23 sont percées d'orifices permettant de projeter le fluide de nettoyage et/ou de dégivrage sur la vitre.

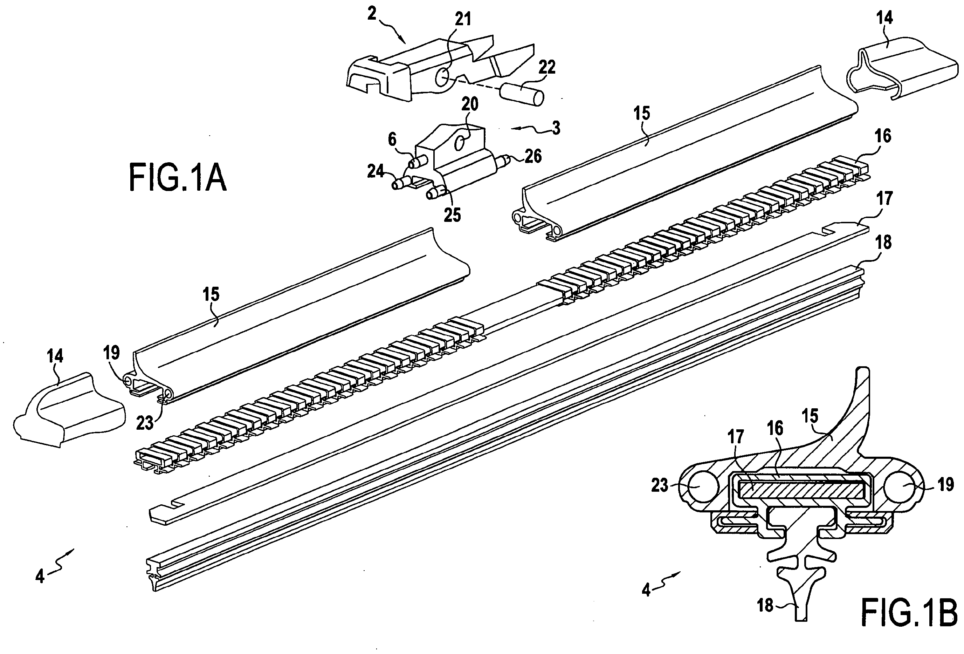

Comme on peut le voir plus précisément sur la vue en coupe transversale de la figure 1b, le déflecteur 15 présente un profil tel qu'il reçoit une monture 16. Cette monture 16, selon son profil spécifique, reçoit à sont tour une latte métallique 17, et, en partie inférieure, une lame 18 d'essuyage en caoutchouc ou similaire.

Deux embouts ou caches 14 ferment les extrémités de chaque parties du déflecteur 15, en sorte de fermer les extrémités des rampes d'acheminement 19, 23, d'empêcher la monture 16, la latte 17 et la lame 18 de glisser hors de leurs logements respectifs, ainsi que pour des raisons d'esthétique.

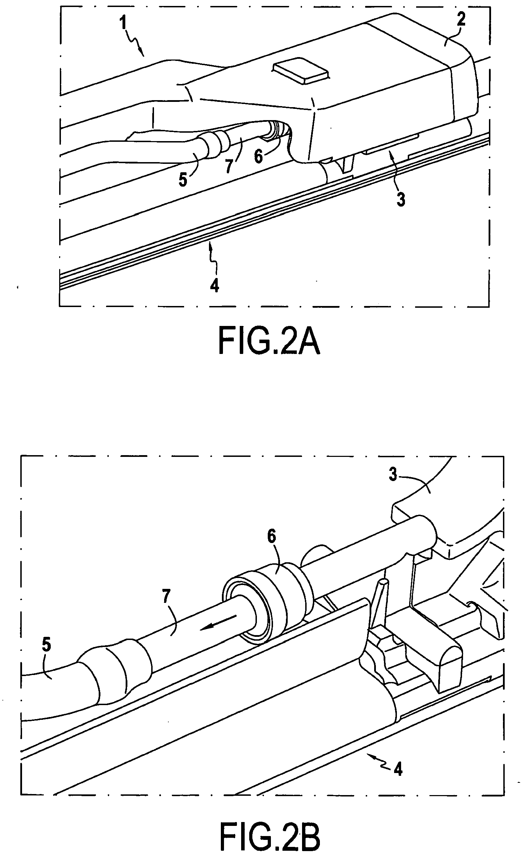

Dans l'exemple représenté aux figures 2a et 2b, on peut voir la liaison entre le bras 1 et le balai 4, par l'intermédiaire de l'adaptateur 2 et du connecteur 3.

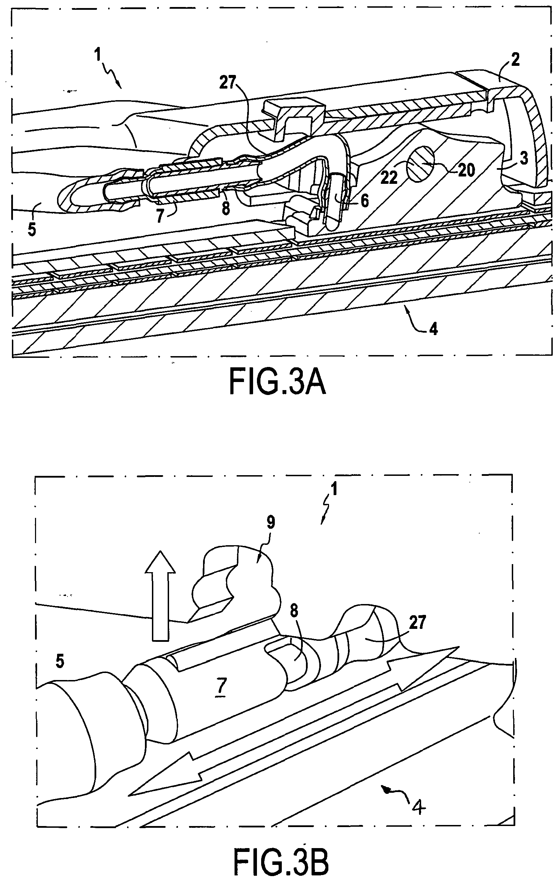

Cette liaison est visible de façon encore plus détaillée dans un autre exemple représenté en coupe à la figure 3a et qui sera décrit un peu plus loin.

Le connecteur 3 présente un raccord d'entrée 6, orienté parallèlement au balai 4, qui est connecté à l'arrivée de fluide 5 par l'intermédiaire de l'élément de jonction rigide 7 également orienté parallèlement au balai 4.

Dans cet exemple, l'élément de jonction rigide 7 présente une première extrémité de diamètre maximal supérieur au diamètre de l'extrémité du tuyau souple d'arrivée de fluide 5, et qui entre en force dans ce tuyau 5. L'étanchéité est ainsi assurée par la déformation impartie au tuyau 5.

L'autre extrémité de l'élément de jonction rigide 7 présente une forme telle qu'elle coopère avec l'extrémité du raccord d'entrée 6 du connecteur 3, en pénétrant en force dans ce raccord d'entrée 6.

Dans la mesure où l'élément de jonction 7 et le raccord d'entrée 6 sont tous les deux rigides, la coopération en force se fait par « clippage », donc par également par déformation. Toutefois, pour assurer l'étanchéité, on peut prévoir un joint d'étanchéité dans le raccord d'entrée 6.

La connexion entre l'arrivée de fluide 5 et le balai 4 est ainsi déportée en arrière de la liaison entre le bras 1 et ce balai 4.

Dans l'exemple représenté aux figures 3a et 3b, deux éléments de jonction rigides 7 et 8 assurent la connexion entre l'arrivée de fluide 5 et le raccord d'entrée 6 du connecteur 3.

Précisément, le connecteur 3 est assemblé en rotation avec l'adaptateur 2, par l'intermédiaire de l'axe 22 dans l'orifice d'assemblage 20. L'adaptateur 2 est lui-même connecté au bras 1.

Le raccord d'entrée 6 dans le connecteur 3 est orienté perpendiculairement au balai 4, par le dessus du connecteur 3.

L'élément de jonction rigide 7 est raccordé par une première de ses extrémités à l'arrivée en fluide 5, comme expliqué plus haut en référence à l'exemple représenté aux figures 2a et 2b.

Par ailleurs, l'élément de jonction rigide 8 est raccordé par une première de ses extrémités à la deuxième extrémité de l'élément de jonction rigide 7, par exemple par « clippage » ne nécessitant qu'un faible effort pour l'utilisateur.

Dans la mesure où l'ensemble de jonction rigide constitué par les deux éléments de jonction rigides 7 et 8 est orienté perpendiculairement au raccord d'entrée 6 du connecteur 3, on prévoit un élément de jonction souple 27, du même type que l'arrivée en fluide 5, pour connecter la deuxième extrémité de l'élément de jonction rigide 8 au raccord d'entrée 6.

Alternativement, on pourrait prévoir que l'élément de jonction rigide 8 présente une forme d'ensemble en « L », de façon à pouvoir se connecter directement au raccord d'entrée 6.

Tel qu'on peut le voir plus précisément sur la figure 3b, les éléments de jonction rigides 7 et 8, assemblés comme expliqué ci-dessus, passent sous une des parois verticales du bras 1. Cette paroi présente des premiers moyens de blocage, 9 sous la forme d'une découpe 9 dans laquelle l'élément de jonction rigide 7 vient s'enfoncer ou se coincer en force, de manière temporaire pour permettre le démontage.

La forme de cette découpe 9 est ainsi adaptée à la forme de la section extérieure de l'élément de jonction rigide 7, pour permettre la coopération entre la découpe 9 et cet élément de jonction rigide 7, et donc le maintien de cet élément en position.

De la sorte, en cas de surpression matérialisée sur la figure 3b par la double flèche orientée parallèlement au balai 4, l'élément de jonction rigide 7 ainsi maintenu en position ne se déconnecte pas. Par ailleurs, le montage reste sans efforts pour l'utilisateur.

La découpe 9, prévue dans cet exemple dans une des parois verticales du bras 1, pourrait aussi être prévue dans une paroi verticale de l'adaptateur 2.

Par ailleurs, si aucune paroi verticale du bras 1 ou de l'adaptateur 2 ne convient, soit parce que le bras 1 ou l'adaptateur 2 ne présentent pas de telles parois verticales, soit parce que la ou les parois verticales du bras 1 ou de l'adaptateur 2 ne sont pas disposées à un endroit adapté, on peut prévoir de former la découpe 9 dans une autre pièce verticale dans le bras 1 ou l'adaptateur 2.

Une telle pièce verticale pourra être rapportée au ou moulée dans le bras 1 ou adaptateur 2.

Comme on peut le voir sur la figure 3b, par l'intermédiaire de la flèche orientée perpendiculairement au balai 4, la coopération entre l'élément de jonction rigide 7 et les premiers moyens de blocage 9 est réalisée perpendiculairement au balai 4, donc à l'effort de surpression.

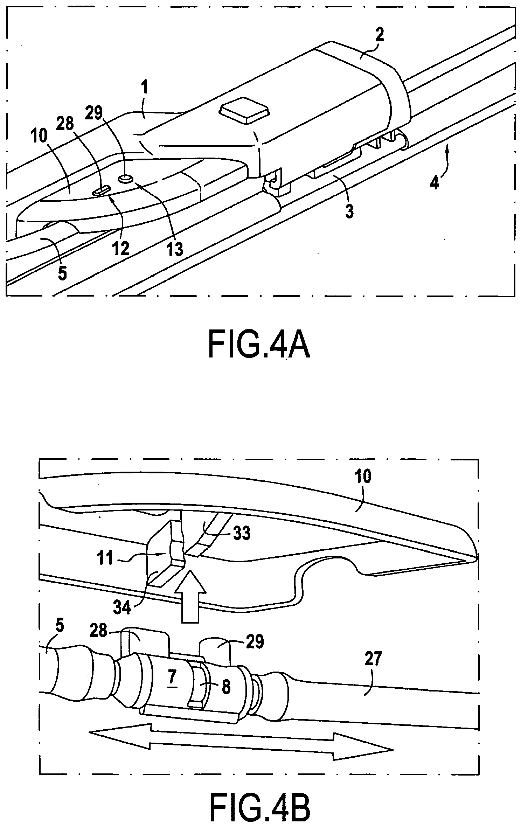

Dans l'exemple représenté aux figures 4a et 4b, on retrouve le bras 1 relié au balai 4 par l'intermédiaire de l'adaptateur 2 et du connecteur 3.

En arrière de cette articulation du balai 4 sur le bras 1, se trouve un couvercle 10, fixé rigidement à ce bras 1.

La fixation rigide de ce couvercle 10 sur le bras 1 peut être directe comme représenté à la figure 4a, ou, alternativement, par l'intermédiaire d'une pièce de jonction.

Ce couvercle 10 recouvre les deux éléments de jonction rigide 7 et 8, comme on peut le voir à la figure 4b.

Alternativement, lorsque les deux éléments de jonction rigide 7 et 8 se trouvent très proches du connecteur 3, et en partie sous la portion du bras 1 qui recouvre le connecteur 3 et l'adaptateur 2, le couvercle 10 peut ne recouvrir que partiellement les éléments de jonction rigide 7 et 8.

Ce couvercle 10 peut comprendre des deuxièmes moyens de blocage 11, tel que représenté à la figure 4b, destinés à assurer le maintien en position des éléments de jonction rigide 7 et 8.

Comme pour les premiers moyens de blocage 9 décrits en référence à la figure 3b, le maintien en position des éléments de jonction rigide 7 et 8 est obtenu par une coopération entre ces éléments 7 et 8 et les deuxièmes moyens de blocage 11, qui s'exerce perpendiculairement au balai 4 selon la flèche verticale de la figure 4b.

Précisément, les deuxièmes moyens de blocage 11 comprennent une découpe 11 formée dans une pièce 33, 34, qui peut être rapportée sur le fond du couvercle 10, ou moulée dans ce couvercle 10.

Dans le cas particulier de la figure 4b, plutôt que de former la découpe 11 dans une seule pièce, on utilise deux pièces 33, 34 rapportée ou moulée tel qu'expliqué ci-dessus et dont les bords en opposition forment la découpe 11.

De façon similaire à ce qui est expliqué ci-dessus relativement aux premiers moyens de blocage 9, la forme de la découpe 11 permet d'y coincer en force l'élément de jonction rigide 7 par « clippage », de manière temporaire.

Là encore, en cas de surpression matérialisée sur la figure 4b par la double flèche orientée parallèlement à l'élément de jonction rigide 7, cet élément 7 ainsi maintenu en position ne se déconnecte pas. Par ailleurs, le montage reste sans efforts pour l'utilisateur.

On prévoit de préférence, dans le couvercle 10, des moyens de déblocage 12, 13, pour faciliter le déblocage de l'élément de jonction rigide 7 de la découpe 11.

Les moyens de déblocage 12 et 13 comprennent deux orifices traversant 12, 13 formés dans le fond du couvercle 10. L'élément de jonction rigide 7 comprend en sa surface deux ergots 28 et 29 qui pénètrent dans les deux orifices traversant 12 et 13.

Les deux ergots 28 et 29 dépassent ainsi de la surface du couvercle 10, à travers les deux orifices 12 et 13. Par pression sur ces deux ergots 28 et 29, l'utilisateur peut alors forcer l'élément de jonction rigide 7 à sortir de la découpe 11, et ainsi obtenir le déblocage de cet élément de jonction rigide 7.

Bien sûr, un unique ergot pénétrant dans un unique orifice traversant, peut suffire. Néanmoins, on préfère deux orifices traversant 12 et 13, répartis de chaque côté de la découpe 11, avec deux ergots 28 et 29 associés, pour faciliter le « déclippage » de l'élément de jonction rigide 7 de la découpe 11.

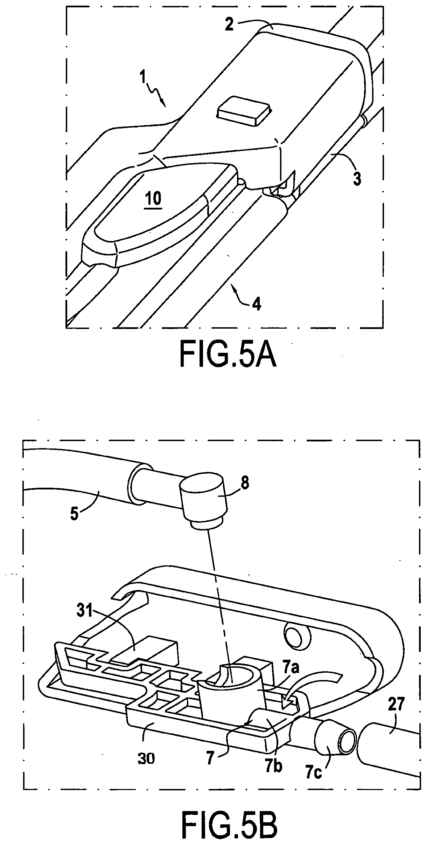

Dans l'exemple représenté aux figures 5a et 5b, le système comprend un socle 30 sur lequel est articulé le couvercle 10 par une ou plusieurs charnières 31.

Ce socle 30 est fixé rigidement au bras 1, directement ou par l'intermédiaire du couvercle 10.

Réciproquement, le couvercle 10 est ainsi fixé rigidement au bras 1, directement ou par l'intermédiaire du socle 30.

Dans cet exemple, le socle intègre directement l'élément de jonction rigide 7, dans lequel vient se connecter l'élément de jonction rigide 8 relié à l'arrivée de fluide 5.

L'élément de jonction rigide 7 se décompose en une partie 7a qui reçoit l'extrémité de l'élément de jonction rigide 8, et une partie 7c qui vient se connecter dans un élément de jonction souple intermédiaire 27 ou directement dans le raccords 6 du connecteur 3 (non représentés). Ces deux parties 7a et 7b sont reliées par un conduit central 7b.

Un tel socle 30, outre qu'il limite également les effets de la surpression en maintenant en position les éléments de jonction rigide 7 et 8, et qu'il facilitele montage sans efforts pour l'utilisateur, peut comprendre des éléments fonctionnels complémentaires venant augmenter les performances du système.

On peut ainsi prévoir par exemple d'intégrer un clapet anti-retour et/ou un ou plusieurs éléments de connexion électrique dans le socle 30. La connexion électrique permet par exemple de chauffer le fluide.

Ces éléments fonctionnels complémentaires, tel qu'un clapet anti-retour ou une connexion électrique, peuvent également être disposés dans le couvercle 10, avec ou sans le socle 30.

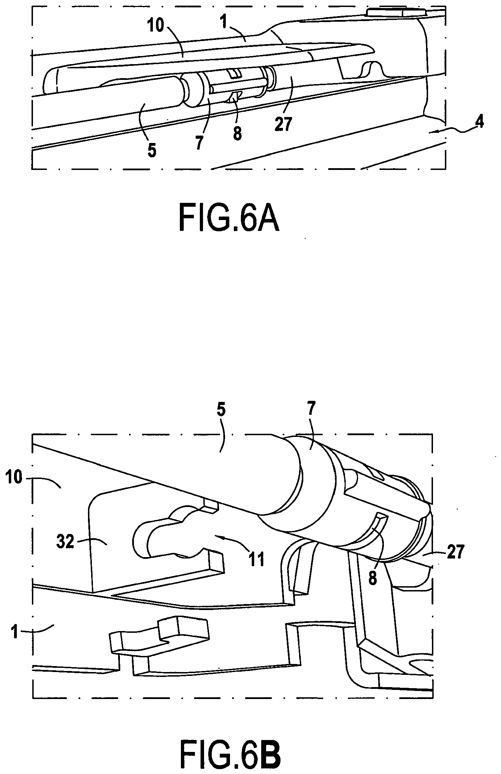

On a représenté aux figures 6a et 6b un autre exemple, qui diffère de l'exemple des figures 4a et 4b simplement en ce que la découpe 11 des seconds moyens de blocage 11, est formée dans une pièce unique 32 rapportée ou moulée au couvercle 10 en sorte que la coopération entre l'élément de jonction rigide 7 et cette découpe 11 soit réalisée perpendiculairement à l'axe longitudinal du balai 4, mais vers le côté et non vers le haut.

Ce type de coopération peut également s'appliquer aux premiers moyens de blocage, directement dans l'adaptateur 2 ou dans le bras 1.

L'ensemble de la description ci-dessus est donné à titre d'exemple, et n'est donc pas limitatif de l'invention.

En particulier, le nombre et la forme exacte des éléments de jonction rigide 7 et 8 ne sont pas limitatifs de l'invention. De fait, la forme précise des découpes 9, et 11 n'est pas non plus limitative de l'invention.

### Liste des références numériques

1 - bras d'actionnement
2 - adaptateur
3 - connecteur hydraulique
4 - balai d'essuyage
5 - arrivée de fluide
6 - raccord d'entrée
7 (7a, 7b, 7c), 8 - éléments de jonction rigide
9 - premiers moyens de blocage
10 - couvercle
11 - deuxièmes moyens de blocage
12, 13 - moyens de déblocage
14 - embouts
15 - déflecteur
16 - monture
17 - latte
18 - lame d'essuyage
19 - rampe d'acheminement du fluide de nettoyage et/ou dégrivrage
20 - orifice d'assemblage dans le connecteur hydraulique
21 - orifice d'assemblage dans l'adaptateur
22 - axe d'articulation
23 - rampe d'acheminement du fluide de nettoyage et/ou dégrivrage
24, 25, 26 - raccords de sortie
27 - tuyau de connexion
28, 29 - ergots de déblocage
30 - socle
31 - charnière
32, 33, 34 -deuxièmes moyens de blocage

## Revendications

1. Système d'essuie-glace notamment pour véhicule automobile, comprenant un balai d'essuyage (4) articulé sur un bras d'actionnement (1) par l'intermédiaire d'un adaptateur (2) connecté d'une part audit bras (1) et d'autre part à un connecteur hydraulique (3), ledit connecteur hydraulique (3) étant connecté audit balai (4) et comprenant au moins un raccord d'entrée (6) destiné à être raccordé à une arrivée (5) de fluide notamment de nettoyage et/ou de dégivrage, le système d'essuie-glace comprend en outre au moins un élément de jonction rigide (7, 8) dont une extrémité est raccordée directement ou indirectement audit raccord d'entrée (6) et dont l'autre extrémité est destinée à être raccordée directement ou indirectement à ladite arrivée de fluide (5) **caractérisé en ce que** l'adaptateur (2) ou le bras (1) comprend des premiers moyens de blocage (9) qui coopèrent avec l'élément de jonction rigide (7, 8) pour assurer son maintien en position, les premiers moyens de blocage (9) comprennent au moins une découpe (9) formée dans une des parois de l'adaptateur (2) ou du bras (1) ou dans une pièce rapportée à l'adaptateur (2) ou au bras (1) ou moulée dans ledit adaptateur (2) ou bras (1), et dont la forme est telle que l'élément de jonction rigide (7, 8) peut être coincé en force dans cette découpe (9) de manière temporaire.

2. Système selon la revendication 1, **caractérisé en ce que** l'élément de jonction rigide (7, 8) est orienté parallèlement au balai (4).

3. Système selon l'une des revendications précédentes, **caractérisé en ce que** les premiers moyens de blocage (9) sont tels que la coopération entre l'élément de jonction (7, 8) et ces dits premiers moyens de blocage (9) est réalisée selon un axe perpendiculaire au balai (4).

4. Système selon l'une des revendications précédentes, **caractérisé en ce qu'**il comprend un couvercle (10) fixé rigidement directement ou indirectement sur le bras (1), en arrière de l'articulation du balai (4) sur ledit bras (1), et sous lequel est disposé tout ou partie de l'élément de jonction (7, 8).

5. Système selon la revendication 4, **caractérisé en ce que** le couvercle (10) comprend des deuxièmes moyens de blocage (11) qui coopèrent avec l'élément de jonction rigide (7, 8) pour assurer son maintien en position.

6. Système selon la revendication 5, **caractérisé en ce que** les deuxièmes moyens de blocage (11) sont tels que la coopération entre l'élément de jonction (7, 8) et ces dits deuxièmes moyens de blocage (11) est réalisée selon un axe perpendiculaire au balai (4).

7. Système selon l'une quelconque des revendications 5 et 6, **caractérisé en ce que** les deuxièmes moyens de blocage (11) comprennent au moins une découpe (11) formée dans une des parois du couvercle (10) ou dans une pièce (32, 33, 34) rapportée audit ou moulée dans ledit couvercle (10), et dont la forme est telle que l'élément de jonction rigide (7, 8) peut être coincé en force dans cette découpe (11) de manière temporaire.

8. Système selon l'une quelconque des revendications 5 à 7, **caractérisé en ce que** le couvercle (10) comprend des moyens de déblocage (12, 13) permettant de faciliter le déblocage de l'élément de jonction (7, 8) des deuxièmes moyens de blocage (11).

9. Système selon la revendication 8, **caractérisé en ce que** les moyens de déblocages (12, 13) comprennent au moins une ouverture (12, 13) dans le couvercle (10) à travers laquelle passe un ergot (28, 29) formé dans l'élément de jonction (7, 8).

10. Système selon l'une quelconque des revendications 4 à 9, **caractérisé en ce qu'**il comprend un socle (30) fixé rigidement sur le bras (1) et sur lequel est articulé le couvercle (10) par un moyen d'articulation de type charnière (31).

11. Système selon la revendication 10, **caractérisé en ce que** l'élément de jonction (7, 8) est intégré au socle (30).

12. Système selon l'une quelconque des revendications 4 à 11, **caractérisé en ce que** socle (30) et/ou le couvercle (10) comprend un clapet anti-retour et/ou au moins un élément de connexion électrique.

13. Système selon l'une quelconque des revendications 1 à 12, **caractérisé en ce qu'**il comprend au moins deux éléments de jonction rigides (7, 8) connectés l'un dans l'autre par l'une de leurs deux extrémités, un (8) de ces dits deux éléments de jonction rigides (7, 8) étant raccordé directement ou indirectement par son autre extrémité au raccord d'entrée (6), et le deuxième (7) de ces dits deux éléments de jonction rigides (7, 8) étant destiné à être raccordé directement ou indirectement par son autre extrémité à l'arrivée de fluide (5).

## Patentansprüche

1. Scheibenwischersystem, insbesondere für ein Kraftfahrzeug, umfassend ein Wischerblatt (4), das an einem Betätigungsarm (1) mit Hilfe eines Adapters (2) angelenkt ist, der einerseits mit dem Arm (1) und andererseits einem Hydraulikstecker (3) verbunden ist, wobei der Hydraulikstecker (3) mit dem Wischerblatt (4) verbunden ist und mindestens einen Eingangsanschluss (6) umfasst, der dazu bestimmt ist, an eine Zuleitung (5) insbesondere eines Reinigungs- und/oder Enteisungsfluids, angeschlossen zu sein, wobei das Scheibenwischersystem ferner mindestens ein starres Verbindungselement (7, 8) umfasst, von dem ein Ende direkt oder indirekt mit dem Eingangsanschluss (6) verbunden ist, und das andere Ende dazu bestimmt ist, direkt oder indirekt mit der Fluidzuleitung (5) verbunden zu sein, **dadurch gekennzeichnet, dass** der Adapter (2) oder der Arm (1) erste Feststellungsmittel (9) umfasst, die mit dem starren Verbindungselement (7, 8) zusammenwirken, um sein Halten in Position zu gewährleisten, wobei die ersten Feststellungsmittel (9) mindestens einen Ausschnitt (9) umfassen, der in einer der Wände des Adapters (2) oder des Arms (1) oder in einem auf den Adapter (2) oder den Arm (1) aufgesetzten oder in den Adapter (2) oder Arm (1) gegossenen Stück ausgebildet ist, und dessen Form derart ist, dass das starre Verbindungselement (7, 8) vorübergehend fest in diesen Ausschnitt (9) gesteckt werden kann.

2. System nach Anspruch 1, **dadurch gekennzeichnet, dass** das starre Verbindungselement (7, 8) parallel zum Wischerblatt (4) ausgerichtet ist.

3. System nach einem der vorhergehenden Ansprüche, **dadurch gekennzeichnet, dass** die ersten Feststellungsmittel (9) derart sind, dass das Zusammenwirken zwischen dem Verbindungselement (7, 8) und diesen ersten Feststellungsmitteln (9) entlang einer Achse senkrecht auf das Wischerblatt (4) stattfindet.

4. System nach einem der vorhergehenden Ansprüche, **dadurch gekennzeichnet, dass** es einen Deckel (10) umfasst, der starr direkt oder indirekt auf dem Arm (1) hinten am Gelenk des Wischerblattes (4) auf dem Arm (1) befestigt ist, und unter dem die Gesamtheit oder ein Teil des Verbindungselements (7, 8) angeordnet ist.

5. System nach Anspruch 4, **dadurch gekennzeichnet, dass** der Deckel (10) zweite Feststellungsmittel (11) umfasst, die mit dem starren Verbindungselement (7, 8) zusammenwirken, um sein Halten in Position zu gewährleisten.

6. System nach Anspruch 5, **dadurch gekennzeichnet, dass** die zweiten Feststellungsmittel (11) derart sind, dass das Zusammenwirken zwischen dem Verbindungselement (7, 8) und diesen zweiten Feststellungsmitteln (11) entlang einer Achse senkrecht auf das Wischerblatt (4) stattfindet.

7. System nach einem der Ansprüche 5 und 6, **dadurch gekennzeichnet, dass** die zweiten Feststellungsmittel (11) mindestens einen Ausschnitt (11) umfassen, der in einer der Wände des Deckels (10) oder in einem auf den Deckel (10) aufgesetzten oder in diesen gegossenen Stück (32, 33, 34) ausgebildet ist, und dessen Form derart ist, dass das starre Verbindungselement (7, 8) vorübergehend fest in diesen Ausschnitt (11) gesteckt werden kann.

8. System nach einem der Ansprüche 5 bis 7, **dadurch gekennzeichnet, dass** der Deckel (10) Freigabemittel (12, 13) umfasst, die es ermöglichen, die Freigabe des Verbindungselements (7, 8) aus den zweiten Feststellungsmitteln (11) zu erleichtern.

9. System nach Anspruch 8, **dadurch gekennzeichnet, dass** die Freigabemittel (12, 13) mindestens eine Öffnung (12, 13) im Deckel (10) umfassen, durch die ein Haken (28, 29) verläuft, der in dem Verbindungselement (7, 8) ausgebildet ist.

10. System nach einem der Ansprüche 4 bis 9, **dadurch gekennzeichnet, dass** es einen Sockel (30) umfasst, der starr auf dem Arm (1) befestigt ist, und auf dem der Deckel (10) durch ein Gelenkmittel vom Typ Scharnier (31) angelenkt ist.

11. System nach Anspruch 10, **dadurch gekennzeichnet, dass** das Verbindungselement (7, 8) in den Sockel (30) integriert ist.

12. System nach einem der Ansprüche 4 bis 11, **dadurch gekennzeichnet, dass** der Sockel (30) und/oder der Deckel (10) eine Rückschlagklappe und/oder mindestens ein elektrisches Anschlusselement umfasst.

13. System nach einem der Ansprüche 1 bis 12, **dadurch gekennzeichnet, dass** es mindestens zwei starre Verbindungselemente (7, 8) umfasst, die über eines ihrer zwei Enden aneinander angeschlossen sind, wobei eines (8) dieser zwei starren Verbindungselemente (7, 8) direkt oder indirekt mit seinem anderen Ende an den Eingangsanschluss (6) angeschlossen ist, und das zweite (7) dieser zwei starren Verbindungselemente (7, 8) dazu bestimmt ist, direkt oder indirekt mit seinem anderen Ende an die Fluidzuleitung (5) angeschlossen zu sein.

## Claims

1. Windscreen wiper system, notably for a motor vehicle, comprising a windscreen wiper (4) that is articulated on an actuating arm (1) by way of an adapter (2) connected for the one part to said arm (1) and for the other part to a hydraulic connector (3), said hydraulic connector (3) being connected to said wiper (4) and comprising at least one inlet connector (6) intended to be connected to a fluid inlet (5) notably for cleaning and/or defrosting fluid, the windscreen wiper system also comprising at least one rigid joining element (7, 8), one end of which is connected directly or indirectly to said inlet connector (6) and the other end of which is intended to be connected directly or indirectly to said fluid inlet (5), **characterized in that** the adapter (2) or the arm (1) comprises first blocking means (9) which cooperate with the rigid joining element (7, 8) in order to keep it in position, the first blocking means (9) comprise at least one cutout (9) which is formed in one of the walls of the adapter (2) or of the arm (1) or in a part connected to the adapter (2) or to the arm (1) or moulded in said adapter (2) or arm (1) and the shape of which is such that the rigid joining element (7, 8) can be temporarily wedged by force in this cutout (9).

2. System according to Claim 1, **characterized in that** the rigid joining element (7, 8) is oriented parallel to the wiper (4).

3. System according to one of the preceding claims, **characterized in that** the first blocking means (9) are such that the cooperation between the joining element (7, 8) and said first blocking means (9) is realized along an axis perpendicular to the wiper (4).

4. System according to one of the preceding claims, **characterized in that** it comprises a cover (10) which is rigidly fixed directly or indirectly to the arm (1), behind the articulation of the wiper (4) on said arm (1), and under which all or some of the joining element (7, 8) is disposed.

5. System according to Claim 4, **characterized in that** the cover (10) comprises second blocking means (11) which cooperate with the rigid joining element (7, 8) in order to keep it in position.

6. System according to Claim 5, **characterized in that** the second blocking means (11) are such that the cooperation between the joining element (7, 8) and said second blocking means (11) is realized along an axis perpendicular to the wiper (4).

7. System according to either one of Claims 5 and 6, **characterized in that** the second blocking means (11) comprise at least one cutout (11) which is formed in one of the walls of the cover (10) or in a part (32, 33, 34) connected to or moulded in said cover (10) and the shape of which is such that the rigid joining element (7, 8) can be temporarily wedged by force in this cutout (11).

8. System according to any one of Claims 5 to 7, **characterized in that** the cover (10) comprises unblocking means (12, 13) for making it easier to unblock the joining element (7, 8) from the second blocking means (11).

9. System according to Claim 8, **characterized in that** the unblocking means (12, 13) comprise at least one opening (12, 13) in the cover (10), through which opening (12, 13) a protuberance (28, 29) formed on the joining element (7, 8) passes.

10. System according to any one of Claims 4 to 9, **characterized in that** it comprises a base (30) which is rigidly fixed to the arm (1) and on which the cover (10) is articulated by an articulation means of the hinge (31) type.

11. System according to Claim 10, **characterized in that** the joining element (7, 8) is integral with the base (30).

12. System according to any one of Claims 4 to 11, **characterized in that** the base (30) and/or the cover (10) comprise a non-return valve and/or at least one electrical connection element.

13. System according to any one of Claims 1 to 12, **characterized in that** it comprises at least two rigid joining elements (7, 8) that are connected together by one of their ends, one (8) of said two rigid joining elements (7, 8) being connected directly or indirectly by its other end to the inlet connector (6), and the second (7) of said two rigid joining elements (7, 8) being intended to be connected directly or indirectly by its other end to the fluid inlet (5).
